# EUROPEAN PATENT APPLICATION

(11) **EP 0 895 170 A2**
(43) Date of publication of application: **03.02.1999**
(21) Application number: 98114005.6
(22) Date of filing: 27.07.1998
(51) Int. Cl.: G06F 17/60

(54) **Parts ordering system, parts management system and apparatus for managing ordering and receipt of orders**

(30) Priority: 28.07.1997 JP 201898/97
(71) Applicant: CANON KABUSHIKI KAISHA, Ohta-ku, Tokyo (JP)
(72) Inventor: Sakayori, Masahiko, Toride-shi, Ibaraki-ken (JP); Otsuji, Naoki, Ohta-ku, Tokyo (JP); Inaba, Yutaka, Ohta-ku, Tokyo (JP)
(74) Representative: Leson, Thomas Johannes Alois, Dipl.-Ing.

(57) **Abstract**

A domain (102), which is a basic constituent for processing the issuance and receipt of orders for parts, executes processing for order issuance (102-5), order receipt (102-1), machining planning (102-2), constructional expansion (102-3) and ordering planning (102-4), thereby decentralizing processing of information relating to parts issuance and inventory. It is possible to realize sufficiently high processing speed even with a small-sized system. In addition, the resulting system allows parts management on a real-time basis. The system lends itself to enlargement and rapid changes in production scheduling that accompany an increase in number of parts, this not be readily feasible with conventional centralized information management.

## Description

### BACKGROUND OF THE INVENTION

This invention relates to a parts ordering system, parts ordering method and parts management system for use in a factory, as well as to a related storage medium.

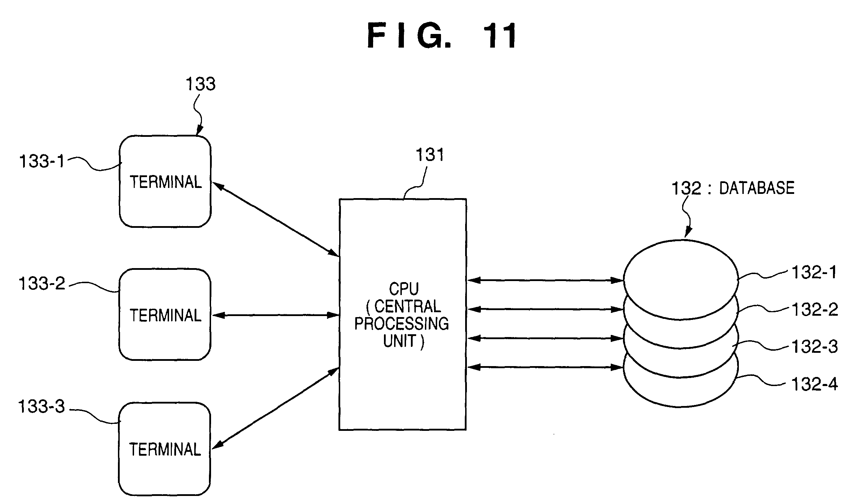

A parts ordering system and inventory management system according to the prior art will now be described with reference to Fig. 11, which is a first embodiment illustrative of a parts ordering system according to the prior art. Operating terminals 133-1, 133-2, 133-3 and storage media (databases) 132-1, 132-2, 132-3, 132-4 and connected to a CPU (central processing unit) 131.

By way of example, 132-1 represents parts master data, 132-2 inventory master data, 132-3 unit-price master data and 132-4 schedule data. Information relating to parts used is managed collectively by the databases 132-1, 2, 3, 4. The terminals 133-1, 2, 3 are for referring to and updating the data of the databases 132-1, 2, 3, 4. In a case where reference is made to inventory, any of the terminals 133-1, 2, 3, 4 is used to refer to the database 132.

If information such as parts handled and scheduling increases, the change is dealt with by increasing the number of items of data without changing the number of databases. On the other hand, consider a case where information such as parts handled and scheduling decreases. This will be described taking the parts master data as an example. Even if data is no longer necessary at the post where the terminal 133-1 is located, the benefit obtained by determining whether the data is being used by the terminals 133-2, 3 and then deleting the data is outweighed by the labor necessitated. Accordingly, rather than eliminating data that is no longer required, the data is left until, say, the final day of updating, at which time the unnecessary data is deleted uniformly in one batch. This can lead to a situation where the amount of unnecessary data increases and is deleted together with data that is required.

Further, since the databases are managed in centralized fashion, the data at any post can also be referred to easily in the same manner as the data at one's own post. On the other hand, when it is attempted to limit the scope of data disclosure in units of terminals or individuals who can access the data, a program must be designed in such a manner that specially limited areas are viewable on a per-terminal or per-user.

Furthermore, managing databases collectively involves dealing with a large quantity of data and results in a large number of terminals connected to the computer (e.g., the terminals 131-1, 131-2, 131-3 in Fig. 11). Consequently, the area in which data is saved (e.g., the database 132 in Fig. 11) is large and the data cannot be processed unless use is made of a large-sized computer having a high processing speed.

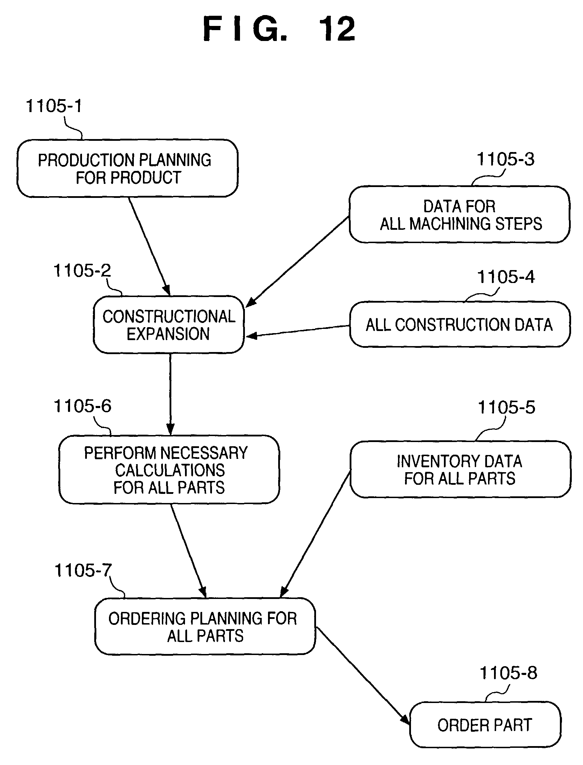

The flow of processing will be described with reference to Fig. 12. Steps 1105-1 through 1105-8 constitute a flowchart illustrating the processing for ordering parts according to the prior art. Step 1105-1 is for entering a plan using, e.g., the terminal 133-1 of Fig. 11. This deals with data for managing the production schedule. The plan specifies the necessary parts and units, the time by which the are needed and the numbers thereof.

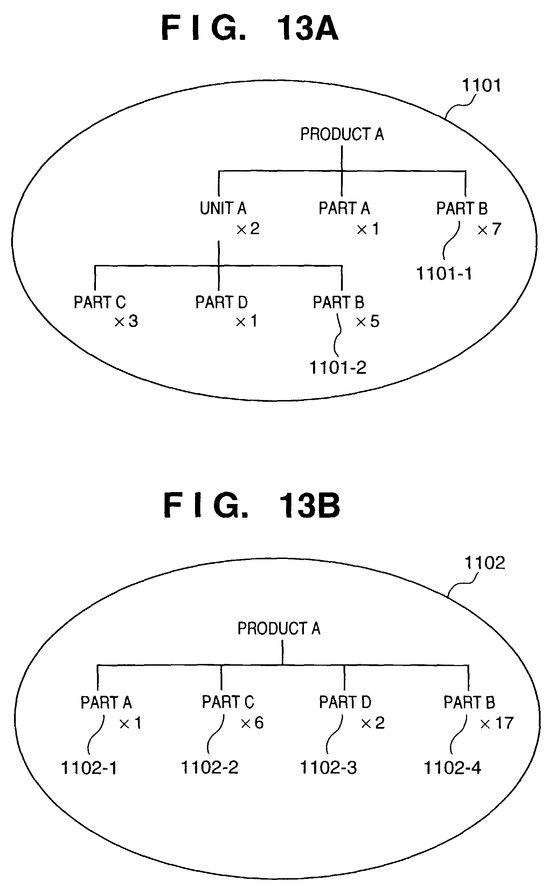

Step 1105-2 performs constructional expansion based upon construction data at 1105-4. How construction is dealt with will be described with reference to Figs. 13A, 13B. In a case where the arrangement of parts and units constructing an actual manufactured product has the form of two layers, as shown at 1101 in Fig. 13A, the number of parts to be prepared does change even if the two-layer structure is rearranged as a single layer in the manner shown at 1102 in Fig. 12B. Constructional expansion for managing number of parts is carried out on a per-layer basis. In the organization of 1101 shown in Fig. 13A, therefore, two layers of constructional expansion are performed (this is referred to as "two-stage constructional expansion"). If the organization shown at 1102 in Fig. 13B is used, however, a single layer of constructional expansion suffices (this is referred to as "one-stage constructional expansion"). Accordingly, constructional expansion in the prior art is carried out using the organization of 1102 in Fig. 13B for the purpose of speeding up expansion processing. With the constructional expansion shown in Fig. 13B, however, parts B at 1101-1 and parts B at 1101-2 in Fig. 13A are totaled to calculate the quantity required. If the workshops at which the parts B are used changes, are different, therefore, a special procedure for divided the required quantity into 1101-1 and 1101-2 is required.

With reference again to Fig. 12, data 1105-3 is for managing machining information relating to all machining steps necessary for constructional expansion. Data such as the sequential order necessary for machining is managed on the day of machining. On the basis of the information relating to product production plan 1105-1, all process machining data 1105-3 and all construction data 1105-4, the numbers of parts A at 1102-1, parts C at 1102-2, etc., in Fig. 13B, as well as the date they are required, are calculated and saved in database 1105-6 at constructional expansion 1105-2. The calculated number (1105-6) of required parts and the inventory data (1105-5) regarding all parts are compared, the number of parts to be purchased and the delivery date are calculated and an ordering plan is devised (1105-7). The ordering plan data is output on a slip and the parts are ordered (1105-8).

Since the needed parts are dealt with collectively and the required amounts thereof as well as the inventory data are generally managed on a per-factory basis, a great amount of processing is required and execution of calculation processing that leads to the updating of all data usually is limited to nights, to the end of the month, etc. Processing executed during the daytime is merely data referencing, addition to inventory and partial data update.

The program for this is designed to decide the order of processing in order to pursue processing efficiency. In regard to certain partial data for which changes must be promptly reflected in ordering processing, a special program for reflecting partial fluctuations must be created in addition to the above-mentioned program.

Furthermore, when the amount of processing increases in the conventional system designed on the assumption that data management and calculations will be implemented by a single computer, the usual method of dealing with this is to increase the capacity of the database 132 (storage medium) in Fig. 11 or switch to a machine in which the computer has greater processing capability (the number of computers is not increased).

However, there is a limit upon the amount of storage medium that can be connected to a single computer. In addition, switching to a machine having more processing capability is disadvantageous since such a machine is very high in cost. In fact, machines capable of handling such processing do not actually exist in many cases.

Thus, parts ordering systems and parts management systems according to the prior art involve a number of difficulties, which can be summarized as follows:
1. An increase in number of parts requires prolonged computer processing.
2. When processing is executed by a large-sized computer in order to achiever faster execution, there is an increase in running cost.
3. When there is an increase or decrease in production, it is difficult to support rapid ordering of parts with centralized information management.
4. If part of the system, such as the CPU, fails, the entire parts ordering and parts management system halts with centralized information management.
5. Data is shared by a large number of sections. As the operation of a parts ordering and parts management system proceeds, data cannot be deleted without first securing agreement from all sections.
6. In processing from modification of a production plan to the ordering of parts, conformity of data cannot be assured unless all processing is performed en masse. In addition, since such processing requires a great deal of time, a limitation is imposed upon processing timing and actual factory inventory will not agree with numerical values obtained by the system. This makes it difficult to achieve management in which information agrees with materials data (matching of information and materials).
7. The system is likely to crash if there is a sudden increase in orders that overwhelms the processing capability of the computer.
8. In order for an order receiver to obtain information, which relates to ordered parts or machining of parts, from the order sender (the factory, etc.), there are cases where the order receiver must take the trouble to go to the factory that is the order sender.
9. Since it is difficult for an order receiver to acquire advance information relating to ordering, drafting a parts purchasing and machining plan is not easy and involves considerable risk.

### SUMMARY OF THE INVENTION

The content of the present invention is set forth as a plurality of claims, each of which is intended to solve at least one of the problems set forth above.

More specifically, the present invention provides a parts ordering system having a first domain, a second domain and a third domain connected in a tree structure, wherein the second domain includes expanding means for expanding, into its component parts, an order that has been received from the first domain, and communication means for communicating, to the third domain, the order for each component part expanded by the expanding means.

Further, the present invention provides a parts ordering system in which a domain on a first network and a domain on a second network are connected via a public line, wherein the domain on the second network includes means for receiving an order from the domain on the first network, means for devising a machining plan based upon the order, means for performing expansion, into each component part, in accordance with the machining plan, means for devising an ordering plan for each expanded component part, and means for ordering in units of individual parts in accordance with the ordering plan.

Further, the present invention provides a parts ordering system having a database which stores a number of specific parts contained in inventory, as well as a first domain, second domain and third domain connected in a tree structure, wherein the second domain includes means for performing expansion, into each component part, based upon an order received from the first domain, communication means for communicating, to the third domain, orders in individual parts units expanded by the expanding means, and stopping means for comparing the number of specific parts contained in inventory stored in the database and a required number of specific parts obtained by expansion performed by the expanding means, and stopping the communication of an order to the third domain in a case where the number of specific parts contained in inventory is greater, by a prescribed number, than the required number of specific parts.

Further, the present invention provides a parts ordering system in which a first domain is internally provided with a database in which a number of specific parts contained in inventory has been stored, wherein the first domain includes means for performing expansion, into each component part, based upon an order received from the second domain, communication means for communicating, to the third domain, orders in individual parts units expanded by the expanding means, and stopping means for comparing the number of specific parts contained in inventory stored in the database within the first domain and a required number of specific parts obtained by expansion performed by the expanding means, and stopping the communication of an order to the third domain in a case where the number of specific parts contained in inventory is greater, by a prescribed number, than the required number of specific parts.

Further, the present invention provides a parts ordering system having a first domain and a second domain connected in a tree structure, wherein the second domain includes expanding means for performing expansion, into each component part, based upon an order received from the first domain, and first control means which controls reference permission for referring to status of order receiving/issuance in individual parts units expanded by the expanding means, control being performed from an operating terminal connected to the second domain.

Further, the present invention provides a parts ordering system having a first domain and a second domain connected in a tree structure, wherein the second domain includes expanding means for expanding, into component parts, an order that has been received from the first domain, first control means which controls permission to refer to an order for a component part expanded by the expanding means, reference being made from an operating terminal connected to the second domain, and second control means for controlling permission to refer to ordering information, within the first domain, related to an order issued to the second domain.

Further, the present invention provides a parts ordering system in which a domain is connected to a first network and a second network, the system having means for communicating information between the first network and the second network selectively depending upon importance of secrecy of the information.

Further, the present invention provides a method whereby a first domain, a second domain and a third domain connected in a tree structure deliver and receive orders, comprising an expanding step at which the second domain expands, into its component parts, an order that has been received from the first domain, and a communication step at which the second domain communicates, to the third domain, an order for each component part expanded at the expanding step.

Further, the present invention provides a method whereby a first domain, a second domain and a third domain connected in a tree structure deliver and receive orders via a database which stores a number of specific parts contained in inventory, comprising an expanding step at which the second domain performs expansion, into each component part, based upon an order received from the first domain, a communication step at which the second domain communicates, to the third domain, orders in individual parts units expanded at the expanding step, and a stopping step at which the second domain compares the number of specific parts contained in inventory stored in the database and a required number of specific parts obtained by expansion performed at the expanding step, and stops the communication of an order to the third domain in a case where the number of specific parts contained in inventory is greater, by a prescribed number, than the required number of specific parts.

Further, the present invention provides a method whereby a first domain, which is internally provided with a database in which a number of specific parts contained in inventory has been stored, accepts an order from a second domain and communicates the order to a third domain, comprising an expanding step at which the first domain performs expansion, into each component part, based upon an order received from the second domain, a communication step at which the first domain communicates, to the third domain, orders in individual parts units expanded at the expanding step, and a stopping step at which the first domain compares the number of specific parts contained in inventory stored in the database within the first domain and a required number of specific parts obtained by expansion performed at the expanding step, and stops the communication of an order to the third domain in a case where the number of specific parts contained in inventory is greater, by a prescribed number, than the required number of specific parts.

Further, the present invention provides a parts management system having a database which stores a number of specific parts contained in inventory, as well as a first domain, a second domain and a third domain connected in a tree structure, wherein the second domain includes means for performing expansion, into each component part, based upon an order received from the first domain, and communication means for communicating, to the third domain, orders in individual parts units expanded by the expanding means, the second domain having input means for inputting, to the database, information relating to a part delivered in accordance with an order.

Further, the present invention provides a parts management system in which a domain is connected to a first network and a second network, the system having means for communicating information between the first network and the second network selectively depending upon importance of secrecy of the information.

Further, the present invention provides a computer readable recording medium on which has been recorded a program by which the following means are implemented by a computer: means for issuing an order, means for receiving an order, means for devising a machining plan based upon the order received, means for performing expansion, into each component part, in accordance with the machining plan, means for devising an ordering plan for a part that has been expanded into its component parts, means for ordering a part expanded into individual parts units based upon the ordering plan, means for reading data from a database in accordance with the order for the part, and means for writing the read data to the database.

Further, the present invention provides an order-receiving/issuing management apparatus for managing receipt of an order in which a local domain receives an order from a first domain, and issuance of an order in which the local domain issues an order to a second domain, comprising display means for displaying data, and display control means for displaying, in combination on the display means, an icon for identifying receipt of an order or issuance of an order, and data indicating results of receipt of an order or issuance of an order represented by the icon.

Further, the present invention provides an order-receiving/issuing management method for managing receipt of an order in which a local domain receives an order from a first domain, and issuance of an order in which the local domain issues an order to a second domain, comprising a display step of displaying data, and a display control step of outputting, in combination to the display step, an icon for identifying receipt of an order or issuance of an order, and data indicating results of receipt of an order or issuance of an order represented by the icon.

Further, the present invention provides a computer readable recording medium on which has been recorded a program by which the following steps are implemented by a computer: a display step of displaying data, and a display control step of outputting, in combination to the display step, an icon for identifying receipt of an order or issuance of an order, and data indicating results of receipt of an order or issuance of an order represented by the icon.

In accordance with a preferred embodiment of the present invention, the first domain, second domain and third domain have means for issuing an order, means for receiving an order, means for devising a machining plan based upon the order received, means for performing expansion, into each component part, in accordance with the machining plan, means for devising an ordering plan for a part that has been expanded into its component parts, means for ordering a part expanded into individual parts units based upon the ordering plan, means for reading data from a database in accordance with the order for the part, and means for writing the read data to the database; wherein a plurality of connections are made possible on a network in a tree structure.

In accordance with a preferred embodiment of the present invention, the means for receiving an order has means for making a comparison with data, which has been retained in a database, to determine whether an order is a new order, a modified order or re-transmission of the same order.

In accordance with a preferred embodiment of the present invention, the means for devising a machining plan has means for comparing a designated delivery date of a received order and planned production date retained in a database, and means for scheduling an expected production date based upon results of the comparison.

In accordance with a preferred embodiment of the present invention, the means for performing expansion into each component part has means for performing expansion in units of individual parts constructing a manufactured product based upon a received order, and means for calculating the number of parts.

In accordance with a preferred embodiment of the present invention, the means for devising an ordering plan has means for comparing a number of parts contained in inventory and a number of parts required, and means for calculating minimum units of an order based upon results of the comparison.

In accordance with a preferred embodiment of the present invention, wherein the first domain, which corresponds to an ordering starting point, has means for issuing an order in accordance with an order input, and the third domain, which corresponds to an ordering end point, has means for receiving an order in response to the issuance of the order.

In accordance with a preferred embodiment of the present invention, the first, second and third domains are connected in a nodeless tree structure, and an order for each component part processed by the first domain is communicated to the third domain without processing being duplicated by the expanding means of the second domain.

In accordance with a preferred embodiment of the present invention, the domain on a third network connected to the domain on the second network via a LAN receives an order, which is issued by the domain on the first network, via a public line, the domain on the second network and the LAN.

In accordance with a preferred embodiment of the present invention, the first control means permits reference to order data, machining plan data and sub-part inventory data of the first domain upon limiting this data to that required by the second domain.

In accordance with a preferred embodiment of the present invention, the first control means gives reference permission based upon a combination of a domain number and password.

In accordance with a preferred embodiment of the present invention, the parts ordering system is constituted by a single domain having order issuing means, order receiving means, machining planning means, constructional expansion means, ordering planning means and ordering means, an interface for making possible interconnection of domains in a tree structure, and input means for inputting, to a database, information relating to a part delivered in accordance with the order.

In accordance with a preferred embodiment of the present invention, the parts management system is constituted by a single domain having order issuing means, order receiving means, machining planning means, constructional expansion means, ordering planning means and ordering means, an interface for making possible connection in a tree structure, and input means for inputting, to a database, information relating to a part delivered in accordance with the order.

In accordance with a preferred embodiment of the present invention, the data displayed on the order-receiving/issuing management apparatus is the number of processed issued/received orders corresponding to the icon.

In accordance with a preferred embodiment of the present invention, the icon on the order-receiving/issuing management apparatus displays one or a combination of a plurality of "expected", "orders determined", "delayed", "divided order", "order modified", inspection in progress" and "acceptance".

In accordance with a preferred embodiment of the present invention, the display control means of the order-receiving/ordering management apparatus displays receipt of an order, a machining plan, constructional expansion, an ordering plan and detailed information of an order on the display means based upon a command from input means.

In accordance with a preferred embodiment of the present invention, the display control step of the order-receiving/ordering management method displays receipt of an order, a machining plan, constructional expansion, an ordering plan and detailed information of an order at said display step based upon a command from an input step.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constituted a part of the specification, illustrate embodiments of the invention and, together with the description, serve to explain the principles of the invention.
Fig. 1 is a diagram illustrating a parts ordering system according to the present invention;
Fig. 2 is a diagram for describing the parts ordering system of the present invention in greater detail;
Fig. 3 is a diagram showing the parts ordering system of the present invention connected utilizing a LAN or a public line;
Fig. 4 is a diagram for describing the communication of data in a domain;
Fig. 5 is a diagram showing that content can be verified from an operating terminal external to the parts ordering system of the present invention;
Fig. 6 is a diagram for describing how to grant a terminal authority to refer to a domain and its data;
Fig. 7 is a diagram for describing arrangement of operating terminals, a CPU and a database in a computer;
Fig. 8 is a diagram illustrating that amount of data is reduced by processing on a per-domain basis;
Fig. 9 is a diagram exemplifying an ordering plan on a per-domain basis;
Fig. 10 is a diagram for describing a method of detailing with an increase in number of domains;
Fig. 11 is a diagram for describing a parts ordering system according to the prior art;
Fig. 12 is a diagram for flow of processing according to the prior art;
Fig. 13A is a diagram illustrating constructional expansion according to the prior art;
Fig. 13B is a diagram illustrating constructional expansion according to the prior art;
Fig. 14 is a diagram illustrating a client-server system;
Fig. 15 is a diagram illustrating the basic configuration of a network in this system;
Fig. 16 is a diagram showing the relationship among clients, a server, domains and work units;
Fig. 17 is a diagram for describing transfer of data domains;
Fig. 18 is a diagram for describing the construction of an operating terminal;
Fig. 19 is a diagram showing an example of a display on an operating terminal;
Fig. 20 is a diagram showing the memory map of a recording medium;
Fig. 21 is a flowchart for displaying order-receiving/ordering data; and
Fig. 22 is a flowchart for describing control of a display.

### DESCRIPTION OF THE PREFERRED EMBODIMENTS

Preferred embodiments of the present invention will be described in detail in accordance with the accompanying drawings.

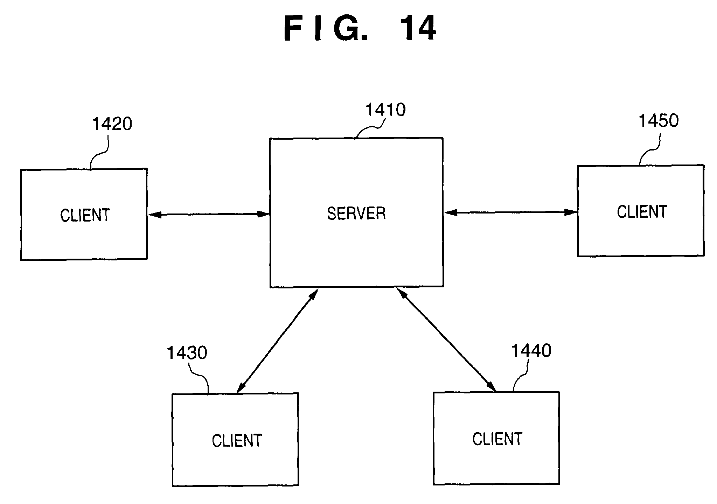

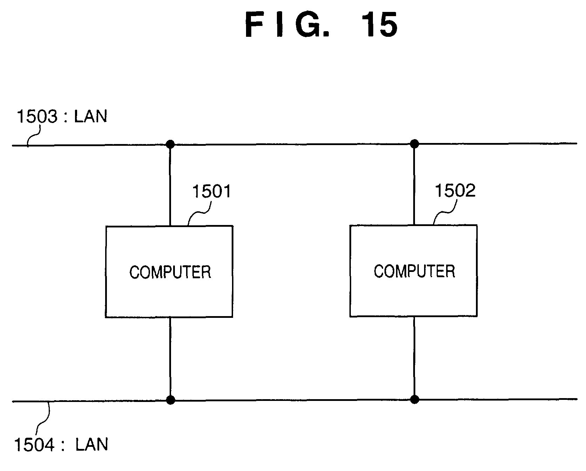

The hardware configuration of the present invention is based upon a client-server system (Fig. 14). The computer architecture is the standard operating system (OS), CPU and memory, with peripheral equipment being an input unit, an output unit and a storage device. Fig. 15 illustrates the configuration of a network in this system. A computer 1501 and a computer 1502 are connected to a plurality of networks via LANs 1503 and 1504. The LAN 1503 is a network limited to communications within a company, and the LAN 1504 is a network expanded for use inside and outside a company.

Security is maintained by using the LANs selectively depending upon whether information has a high or low level of secrecy. For example, production information such as an ordering plan or purchasing unit price is highly secret and constitutes very important data in terms of business strategy. Accordingly, the closed network 1503 for in-house use only is employed for handling this information. On the other hand, information the disclosure of which is allowed external to the company is dealt with using the network 1504. Adopting such a double-track communications network not only maintains security but also is effective in terms of providing redundancy in the event of system failure.

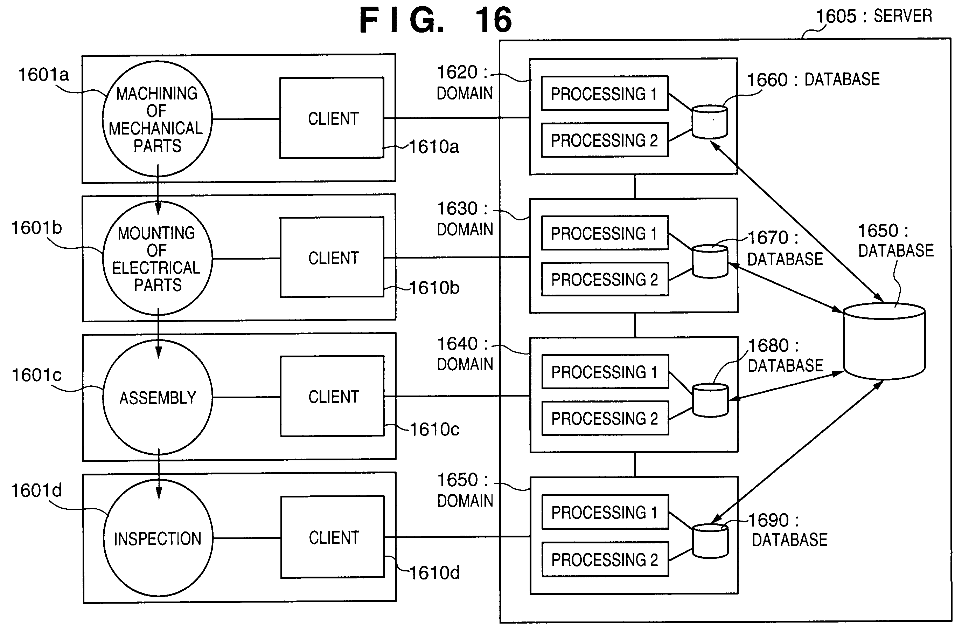

Fig. 16 shows the relationship among clients, domains and a server. A "domain" is a working unit on a production line and is the unit of processing of a server in a computer system.

For example, assume that a manufactured product is completed via a four-step process, namely machining (1601a) of mechanical parts, mounting (1601b) of electrical parts, assembly (1601c) and inspection (1601d). Domains corresponding to these process steps and implemented in the server execute processing independently to manage the process steps. For instance, a fabrication command "300 parts a at a delivery date of July 15th" is issued to process 1601a, which is charged with machining mechanical parts, via a client 1610a by processing (e.g., machining planning, placing of orders outside the company, etc.) executed by a domain 1620 constituting a server 1605.

The progress of process 1601a (namely the status of progress with regard to an order) is input to a database 1660 in domain 1620 and to a database 1650 of the server.

Similarly, the electrical part mounting process 1601b is supported by a domain 1630 via a client 1610b to manage the mounting processing. Likewise for the assembly process 1601c (for which the corresponding domain is at 1640) and inspection process 1601d (for which the corresponding domain is at 1650). The domains correspond to the process units on the line and the demarcations of human activity are made the demarcations of computer processing. Reflecting the concept of units of human activity in the system makes it possible to deal flexibly and speedily with such changes as a switch in the model of a manufactured product, a parts modification, a process modification and process addition, etc. Expandability will be described below.

As shown in Fig. 16, the database 1650 manages information shared by the domains, and databases 1660, 1670, 1680, 1690 located within the domains manage independent data necessary for processing executed by the individual domains. The internal databases are shown as being incorporated in the domains for the sake of the illustration. However, the inclusion of a database is not an essential requisite in terms of the function of a domain.

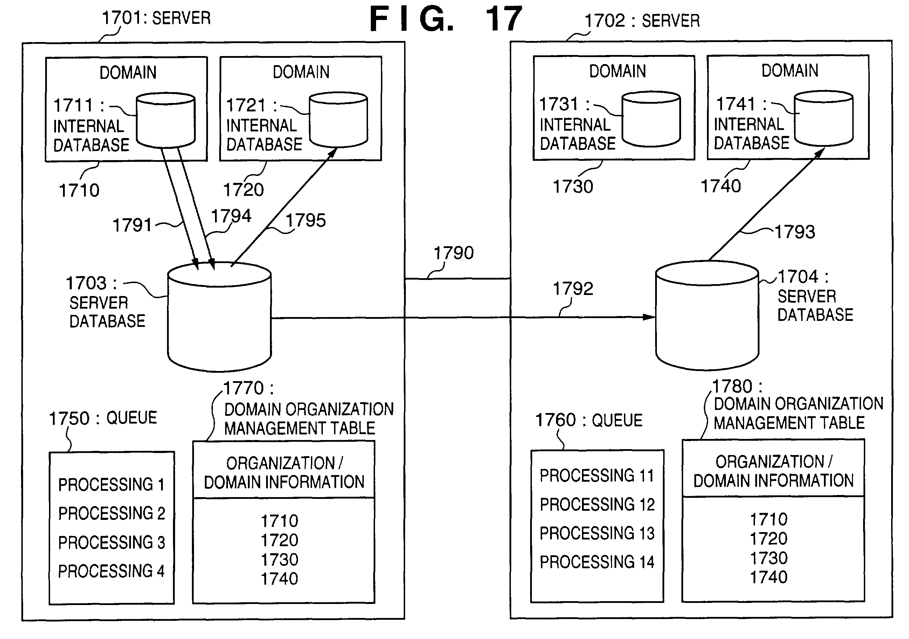

An approach to the transfer of data between domains will be described next with reference to Fig. 17. A server 1701 and a server 1702 are connected by a communications network 1790. Domains 1710 and 1720 have been registered in the server 1701, and domains 1730 and 1740 have been registered in the server 1702. Each server has databases (1703, 1704), processing queues (1750, 1760) and domain organization management tables (1770, 1780). The organization management tables indicate domain information that has been registered in the servers. The content of these tables is the same in both of the servers. Defined in each table are the IP address, password and user ID of the domain. In a case where a process has been added on to deal with a new manufactured product, it will suffice to add on a new domain to the organization management tables (1770, 1780) and define the domain.

### 〈Data transfer between domains when servers are different〉

Consider a case where the domain 1710 in server 1701 has issued an order to the domain 1740 in server 1702. The order is spooled temporarily as processing 1 in the queue 1750 and is registered in the server database 1703 (data path 1791). The designation of the connection destination is key information by which the resident process program performs retrieval. The information serves as the pointer of the data transfer. Even if a plurality of connection destinations have been registered, the connection of a plurality of domains is possible in a similar manner (by a one-to-many connection). Further, in accordance with a defined order of priority, the resident process program is capable of performing a one-to-one connection, in transfer destinations are limited to a single destination.

The domain 1710 registers the transfer data and the transfer destination in the database 1703, whereby the resident process program (referred to as "resident process A" below) of the server 1701 is activated to begin data transfer processing (processing 1 in the queue 1750).
① The resident process A retrieves the domain number of the transfer destination from the database 1703 and retrieves the IP address, password and user ID of this domain from the domain organization management table 1770.
② If the result of retrieval is that the transfer destination is not within the same server but is a domain in a different server, the resident process A writes the transfer data to the database 1704 of server 1702 temporarily and registers the data in the queue 1760 as processing 11 (data path 1792).
③ The resident process program (referred to as "resident process B" below) of server 1702 is activated by registration of processing 11 in queue 1760 and starts re-transfer of the data.
④ The resident process B retrieves the domain number of the transfer destination from the database 1704 and retrieves the IP address, password and user ID of this domain from the domain organization management table 1780.
⑤ Using the domain number and the IP address, password and user ID as key information, the resident process B checks the domain 1740 and writes the transfer data to the internal database 1741 (data path 1793).

### 〈Data transfer between domains in the same server〉

① The process is similar when the transfer is within the same server. Consider a case where the domain 1710 has issued an order to the domain 1720 in the same server. The order is spooled temporarily as processing 3 in the queue 1750 and the transfer data and transfer destination are registered in the server database 1703 (data path 1794).
② By registering the transfer data and transfer destination, the resident process A is activated and begins data transfer processing (processing 4 in queue 1750).
③ The resident process A retrieves the domain number of the transfer destination from the database 1703 and retrieves the IP address, password and user ID of this domain from the domain organization management table 1770.
④ Using the domain number and the IP address, password and user ID as key information, the resident process A checks the domain 1720 and writes the transfer data to the internal database 1721 (data path 1795).

### 〈Description of parts ordering system and parts management system〉

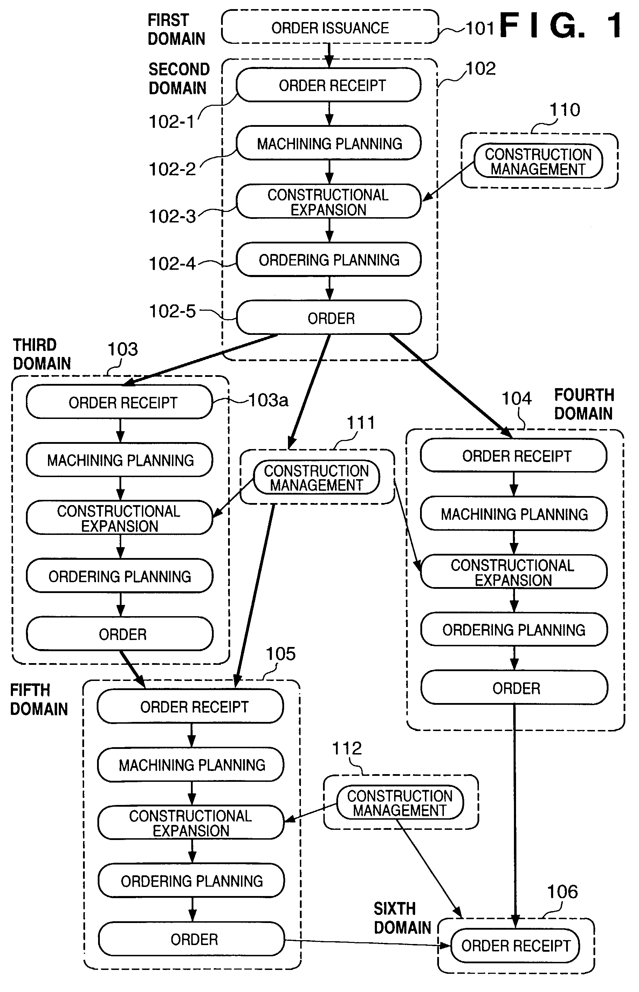

The parts ordering system and parts management system according to the present invention will be described with reference to Figs. 1 through 10. It should be noted that components with identical functions in these drawings are designated by like reference characters.

Units of processing referred to as domains are shown at 101, 102, 103, 104, 105 and 106 in Fig. 1 and represent virtually allocated data processing areas in a computer. The units correspond to work units of workshops in a factory, such as main assembly and sub-assembly workshops. The domains are connected in a tree structure identical with the order of process steps up to the completion of the commodity. Each individual domain has the same functions, the receipt of an order, internal processing and the issuance of an order.

Though a plurality of operating terminals for referring to or updating domain data can be connected to each domain, a case in which one terminal is connected to one domain will be described in order to assure a better understanding of the invention. The processing executed within each domain includes receipt of data, machining planning, constructional expansion, ordering planning and order issuance. In order to implement the functions of constructional expansion and order issuance, domains (110, 111, 112) managing the makeup of an order refer to construction data. Thus, an order issued by a domain located farthest upstream is sent to domains downstream. A domain that has received an order performs constructional expansion into sub-parts and subassembly parts, etc., based upon the order. Further, on the basis of data such as number of parts in inventory stored in the database of each domain, the domain decides the number of orders and delivery of individual sub-parts and subassembly parts, etc., and transfers the order to the domain that processes the data relating to the respective parts.

Thus, the functions of receiving orders, planning machining, performing constructional expansion, planning ordering and issuing orders are completed in each domain and the data is sent to the domain 106 farthest downstream. The domain 106 farthest downstream corresponds to the order receiver of orders for individual sub-parts, subassembly parts, etc., from the factory. The order receiver is capable of confirming the content of the order using a terminal. The domains 101, 102, 103, 104, 105 according to the present invention use identical programs in order to attain the above-mentioned functions. This is advantageous in terms of systems development schedule, system cost, ease of expansion and maintenance management cost, etc.

By implementing parts ordering and inventory management by decentralized processing on a per-domain basis, high-speed processing is possible even in a small-scale system. This makes it possible to configure a system that suppresses prolongation of computer processing time that accompanies an increase in the number of parts.

Further, by virtue of real-time high-speed processing, it is possible to deal rapidly with parts orders and to perform management in which information and materials data are coordinated.

Though the common program is employed in the domain 101 farthest upstream, use is made of a partial program to implement the order issuance function. In addition, a partial program for implementing the order receiving function is used in the domain 106 farthest downstream.

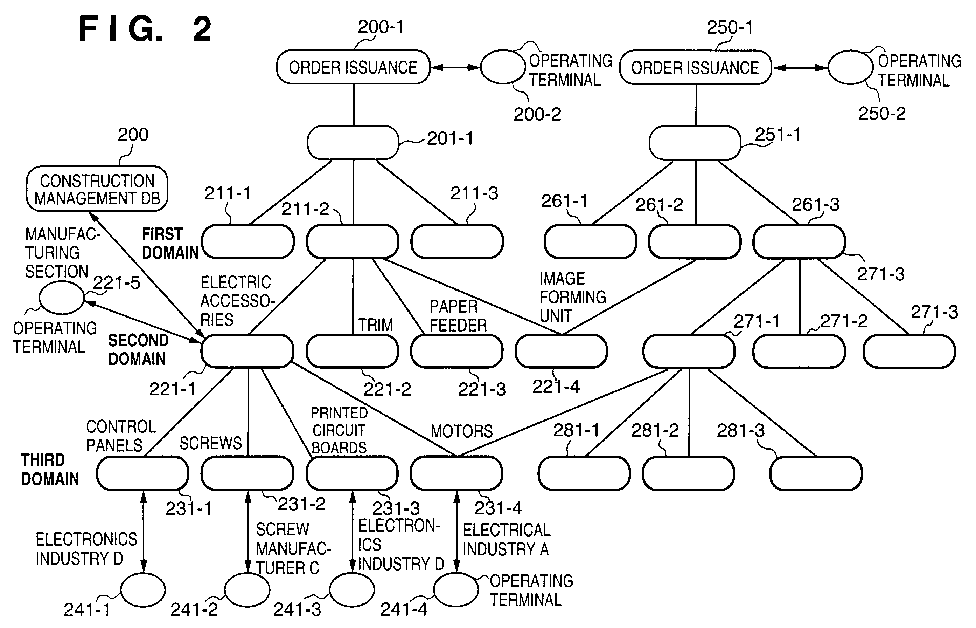

The system according to the present invention will now be described in further detail with reference to Fig. 2.

Domains relating to ordering of parts for a manufactured product A are shown at 200-1, 201-1, 211-1, 211-2, 211-3, 221-1, 221-2, 221-3, 221-4, 231-1, 231-2, 231-3 and 231-4, and domains relating to ordering of parts for a manufactured product B are shown at 250-1, 251-1, 261-1, 261-2, 261-3, 221-4, 271-1, 271-2, 271-3, 231-4, 281-1, 281-2 and 281-3.

A construction management DB 200 is a database connected to each domain to manage construction data necessary for the internal processing of each domain. An operating terminal 200-2 is connected to the domain 200-1 and inputs an order to be issued. An operating terminal 221-5 is connected to the domain 221-2 and manipulates the data in the domain 221-1, e.g., enters a machining plan, corrects an error in number of parts in inventory and inputs the number of articles of merchants delivered, etc. Domains 241-1, 241-2, 241-3, 241-4 are order receiver terminals that make it possible to refer to orders, to output statements of delivery, etc.

Individual domains are connected by a communication line such as a LAN, as a result of which the domains can send and receive data to and from each other even if domains are at physically remote locations. The domains are not limited to a program system constructed in a computer system located in the same area. For example, in the case of Fig. 2, even if the domain 200-1 for issuing orders is located in the head office in Japan, downstream first domains 211-1, 211-2, 211-3 are subsidiaries in Japan, downstream second domains 221-1, 221-2, 221-3, 221-4 are unit product manufacturers located in a second country and downstream third domains 231-1, 231-2, 231-3, 231-4 are parts fabrication makers located in a third country, it is possible to send and receive information relating to the receipt/issuance of orders and delivery. The system of the present invention functions as a parts ordering system and as a parts management system.

In regard to "order issuance", the parts ordering system of the present invention is such that a product name or unit name to be produced, the number thereof and the required delivery date are entered from terminals (200-1, 250-1) connected to the domains farthest upstream. In response to the input, "order issuance" processing starts within the domain (200-1) farthest upstream, as a result of which an order is sent to the domain (201-1) one layer below. Though the program functions used by the domains constituting this system, namely the portions relating to the functions of receiving orders, planning machining, performing constructional expansion, planning ordering and issuing orders, are the same in each domain in order to obtain the advantages in terms of systems development schedule, system cost, ease of system expansion and maintenance management cost, etc., the function of the program used in the domain farthest upstream is the order issuance function.

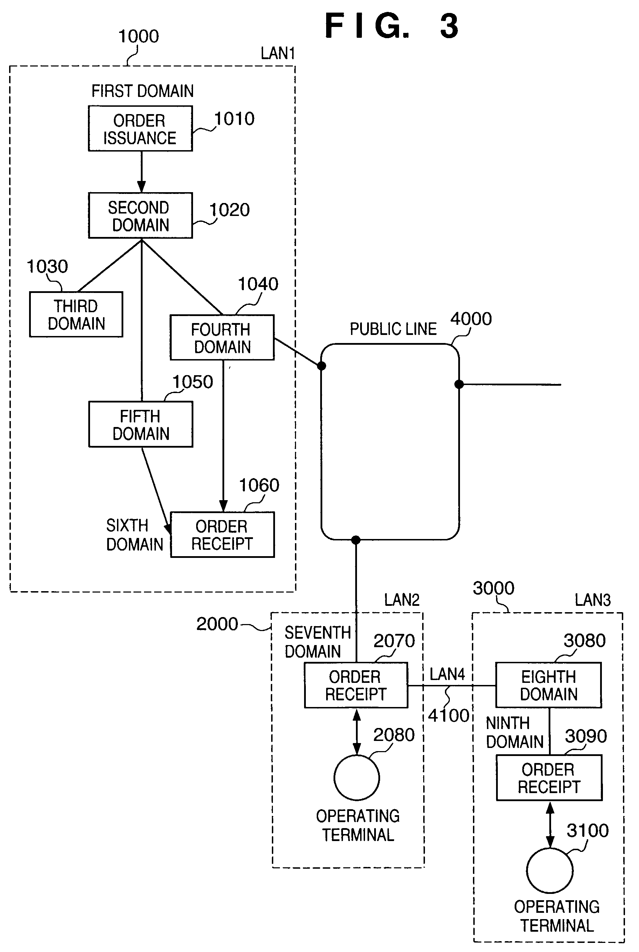

Fig. 3 shows a case where domains on a LAN 1 of the parts ordering system are connected to a public line 4000 and send orders to domains set up on a LAN 2 at a remote location. The groups of domains connected to the LAN 1, public line 4000 and LAN 2 function in their entirety as a single parts ordering system. An order is issued by a first domain (1010) on LAN 1 and the order is processed by second (1020) through sixth (1060) domains. The fourth domain (1040) is connected to the public line 4000. An order based upon the ordering plan of the fourth domain is sent to the sixth domain (1060) as well as to a seventh domain (2070) on LAN 2 via the public line (4000).

The seventh domain (2070) on LAN 2 and an eighth domain (3080) on a LAN 3 are connected via a LAN 4 (4100). It is also possible for the domains on LAN 1 to be connected to a public line and to send orders to the domain on LAN 3 via the domain constructed on remote LAN 2. The group of domains connected by the LAN 1 (1000), public line (4000), LAN 2 (2000), LAN 4 (4000) and LAN 3 (3000) function in their entirety as a single parts ordering system. The order from the first domain (1010) on LAN 1 reaches the seventh domain (2070) on LAN 2 via the connection between the fourth domain (1040) and public line 4000, and thence arrives at the eighth domain (3080) on LAN 3 via the LAN 4. The seventh domain (2070) and eighth domain (3080) each execute processing with regard to the order received. Displays on terminals based upon receipt of the order will be described later.

Communication via the intermediary of the public line and LANs makes it possible to enlarge the parts ordering system domestically or internationally. For example, application of the parts ordering system and parts maintenance system according to the present invention is possible even in a case where LAN 1 is considered a domestic order sender of an order and the LANs 2, 3 are considered order receivers for overseas procurement.

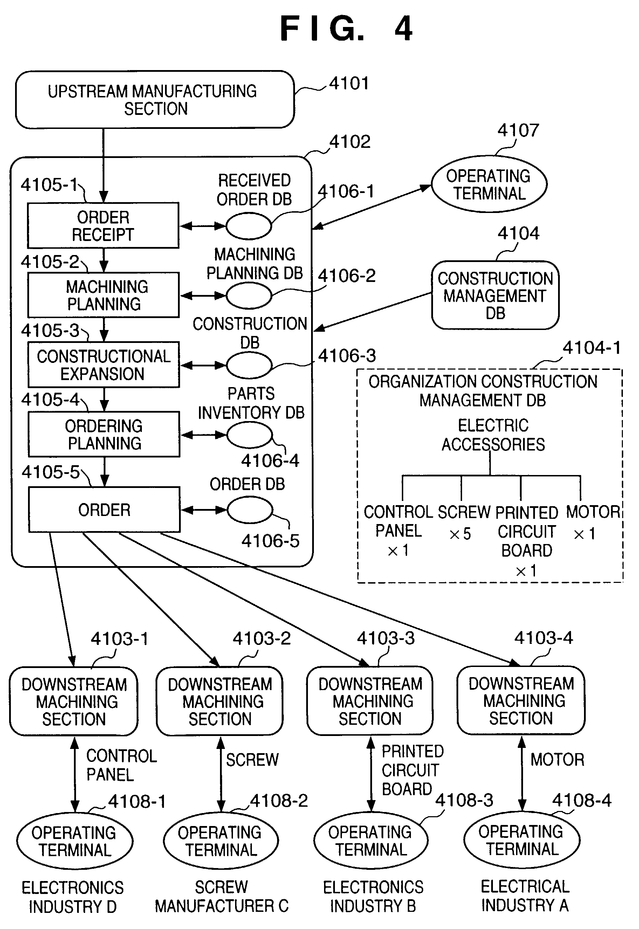

The communication of data within a domain will be described with reference to Fig. 4. An order issued from a domain 4101 is received at 4105-1 of a domain 4102. Here all received orders are preserved in a database 4106-1 and a comparison is made to judge whether a received order is a new order, a modification of an order received earlier or an identical order than has been re-sent. As a result, recovery processing for when an order is lost can be executed reliably and in simple fashion.

In case of a new or modified order, processing proceeds to machining planning (4105-2). Machining planning involves schedule processing for the machining site in domain 4102. For example, planning such as the schedule for machining a part, whether 50 parts are to be assembled every day or whether 10 parts are to be assembled only on Monday every week, is entered using an operating terminal 4107 and this is stored in a database 4106-2.

For example, if the domain 4102 receives a new order for "ten electrical accessories by a delivery date of May 20th", a comparison is made with earlier orders using a received-order database (DB) 4106-1. Since the order is a new order in this case, it is sent to machining planning 4105-2. Here an already determined plan is called from the database 4106-2 to find a date on which an order for ten units can be met. If the machining plan is such that 50 units have been set for May 15th and 25 units for May 25th, the order for ten units is assigned to the production scheduled for May 15th, which is the earliest machining date, and the ten units are produced on this date. The running efficiency of the production line is raised by equalizing the production plan in this manner.

The data is then delivered as "10 units of production on May 15th" to constructional expansion 4105-3. The constructional expansion at 4105-3 involves determining whether construction data is present in a database 4106-3 and, if the does is not present in this database, copying construction data indicated at 4104-1 from an organization management database (DB) 4104 to an organization database 4106-3, and calculating the parts, sub-units and numbers thereof necessary to fabricate the electrical accessories based upon the construction data. In this example relating to electrical accessories, it is calculated that 10 control panels, 50 screws, 10 printed circuit boards and 10 motors are required on May 15th. This data is sent to ordering planning 4105-4.

Ordering planning 4105-4 involves comparing inventory of currently existing "control panels, screws, printed circuit boards and motors", obtained from a database 4106-4, with the necessary numbers of parts sent earlier.

For example, assume that inventory is as follows:" control panels: 0; screws: 25; printed circuit boards: 8; motors: 9". Next, the numbers of parts to be ordered is decided from the minimum order number registered in the parts inventory database 4106-4. The minimum order number is the minimum number of parts purchased decided in advance between the ordering side and delivery side owing to limitations such as the number of packages. For example, in case of "control panels: 5; screws: 100; printed circuit boards: 10; motors: 1", the order to be issued will be "control panels: 10; screws: 100; printed circuit boards: 10; motors: 9". This data is sent to an order function 4105-5.

The order function 4105-5 preserves the ordering history in an order database 4106-5 and then issues an order for ten control panels to domain 4103-1, 100 screws to domain 4103-2, ten printed circuit boards to domain 4103-3 and nine motors to domain 4103-4, these domains being machining sections located downstream.

The order is received by the domains 4103-1, 4103-2, 4103-3 and 4103-4. Through processing similar to that executed by domain 4102, these domains (4103-1, 4103-2, 4103-3, 4103-4) also compare the order with all orders received previously, determine whether the order is a new order, etc., and separate new orders to be dealt with and orders that are modifications of previously received orders. If a domain is farthest downstream (whether a domain is farthest downstream is known when no order construction is found to exist when one goes to acquire the makeup of an order received by the domain 4104) a slip for a new order and a slip for a modified order are output from printers connected to operating terminals 4108-1, 4108-2, 4108-3, 4108-4.

For example, a slip for "nine motors for delivery on May 15th", which is part of the order just calculated by domain 4102 and sent to domain 4103-4, can be printed from the printer of terminal 4108-4 of electrical industry A. In the parts ordering system of the present invention, the operating terminal 4108-4 has electrical industry A as its order receiver, the operating terminal 4108-3 has electronics industry B as its order receiver, the operating terminal 4108-2 has screw manufacturer C as its order receiver and the operating terminal 4108-1 has electronic industry D as its order receiver.

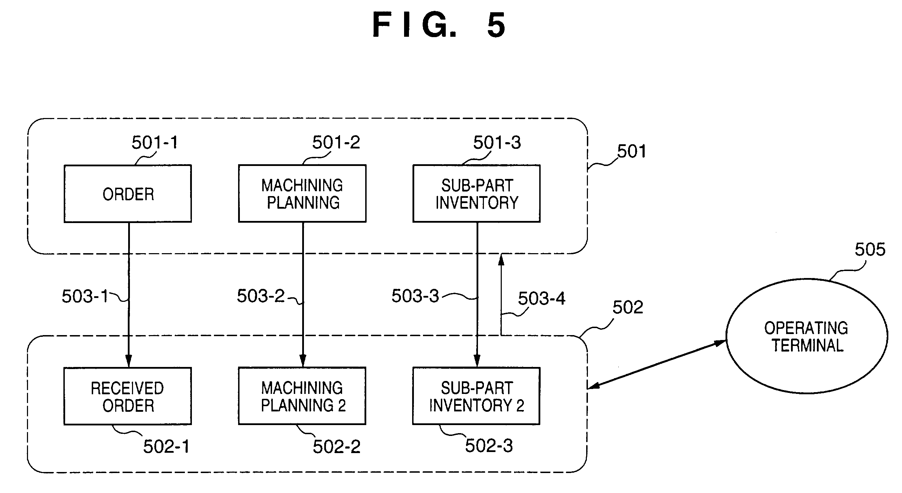

The present system is such that with regard to orders from domains of upstream machining sections (factories), it is possible to refer only to order data sent and received between these domains and immediately higher order or lower order domains. (Reference to a higher order domain will be described later with reference to Fig. 5.)

Accordingly, it is not possible to refer to data between domains that do not send and receive data relating to orders mutually issued and received. For example, with regard to domain 4103-4, the order receiver of a motor order from the factory (4102) is electrical industry A. Electrical industry A can verify the issuance of an order by domain 4103-4 from terminal 4108-4 with which electrical industry A is equipped. Other order receivers, namely electronics industry B, screw manufacturer C and electronic industry D, cannot verify the content of an order from domain 4103-4.

Further, domain 4101, which is an upstream machining section (factory), cannot refer to ordering information of machining section domains that are downstream of domain 4102 (though it can refer to the information of domain 4102).

A well-known security system can be applied as is to associate domain 4103-4 and terminal 4108-4. For example, the number of the terminal of the order receiver and a password can be stored in the domain. When there is an access request from the terminal, the terminal can verify the content of an order from the domain only when the number of the terminal seeking access permission and the entered keyword match at the domain.

Furthermore, in the ordering system according to the present invention, it is possible for an order receiver to verify not only the content of the domain farthest downstream but also the content of the domain one layer upstream (the immediately higher order domain). This will be described with reference to Fig. 5.

Shown in Fig. 5 are an order receiver domain 502; a domain 501 one layer upstream; a terminal 505 capable of referring to domain 502; all order data 501-1 of domain 501; received-order data 502-1, which is part of the order data of domain 501 that is for domain 502; machining planning data 501-2 of domain 501; machining planning (2) data 502-2, which is a copy of the machining planning data 501-2 of domain 501; sub-parts inventory data 501-3 of domain 501; and sub-parts inventory (2) data 502-3 which, of the inventory data in 501-3, is inventory data regarding only parts ordered from domain 502.

The received-order data 502-1 (503-1) is sent whenever an order is generated. However, the machining planning (2) data 502-2 (503-2) and sub-parts inventory (2) data 502-3 (503-3) are sent from domain 501 in response to a request 503-4 from the terminal 505, after which this data is preserved in domain 502. The terminal 505 refers to the machining planning (2) data 502-2 and the sub-parts inventory (2) data 502-3 of domain 502. As a result, it is possible to prevent leakage of data in domain 501 that is not for use in domain 502. In addition, the order receiver (domain 502 in this case) is capable of verifying in advance the issuance of an order for which there is a possibility in the future. Since the order receiver can ascertain a future plan in advance upon creating a production schedule, it is possible to reduce business risk.

Furthermore, the domain 502 preserves the data. Therefore, if the processing by domain 501 ceases or in the event that the communication of data 503-2, 503-3, 503-4 is interrupted, verification is possible based upon data 502-2, 502-3 previously acquired.

In the parts ordering system of the present invention, there are a plurality of domains situated farthest upstream, a product name, unit name and delivery date associated with production are entered from each domain farthest upstream, and these are eventually forwarded to the domains of the order receivers.

For example, with reference to Fig. 2, an order that has entered domain 200-1 is expanded to a domain 201-1, thence to domains 211-2, 221-1 and arrives at domain 231-4 as an order for a motor.

An order that has entered the other domain 250-1 is expanded to domains 251-1, 261-3 and 271-1 and arrives at domain 231-4 as an order for a motor. This becomes the order to electrical industry A. The terminal 241-4 of electrical industry A is capable of verifying the orders as the order of the electric accessories domain 221-1 and the order of the domain 271-1, these domains being one layer higher. Furthermore, the electrical industry A is capable of ascertaining the individual motor inventories and motor use schedules of domains 221-1, 271-1. Thus, orders can be received from a plurality of domains in the manner described above. Though acceptance of orders has been illustrated here as an example, it is possible to deal with a plurality of domains also in a case where orders are issued. Accordingly, it is possible to issue orders to a plurality of domains as well.

For the sake of convenience an example has been described in which orders from domains farthest upstream are processed in a plurality of downstream domains down to the domains farthest downstream by functions such as the constructional expansion function. However, there are cases where processing is not in line with this flow. For example, assume that there are four domains between a domain farthest upstream and a domain farthest downstream. In the hierarchical structure of domains shown in Fig. 2, an order can be issued to a domain farthest downstream from an intermediate domain even if processing in the total of five domains (200-1, 201-1, 211-2, 221-1, 231-2) is not executed, as in the ordering of screws. In this case the issuance of an order to the order receiver can be carried out by setting the destination of the data in such a manner that the order will be sent to the domain farthest downstream and not to the next domain. This has the effect of shortening the time needed for issuance of the data.

Goods arrival processing and inventory management in a case where goods have been delivered from the order receiver will be described with reference to Fig. 4. Terminals 4107, 4108-1, 4108-2, 4108-3, 4108-4 are connected to domains. An order sheet is fetched from a terminal, the order sheet is affixed to goods to be delivered and acceptance is performed at terminal 4107 of the ordering domain (the domain one layer upstream, namely domain 4101 in case of domain 4102 and domain 4102 in case of domains 4103-1, 4103-2, 4103-3, 4103-4). If domain 4102 is taken as an example, the number of acceptances is written to the order data of 4106-5 at the same time as acceptance, thereby completing goods arrival in regard to the order.

The acceptance data is returned to the domains 4103-1, 4103-2, 4103-3, 4103-4 and the recipient concerns (electronics industry D, electrical industry A) can verify the data immediately at the terminals 4108-1, 4108-2, 4108-3, 4108-4. Furthermore, the parts inventory database 4106-4 is incremented by the number of acceptances, thereby increasing the numbers of parts in inventory. The delivery route is not limited to the ordering domains but may be the machining section or concern that uses the parts.

Taking Fig. 2 as an example, assume that the ordering domain is domain 221-1. If a printed circuit board is used in a control panel, the electronics industry B, which is the deliverer of the printed circuit board, can deliver the circuit board not to domain 221-1 but to domain 231-1 of the downstream machining section that fabricates the control panel.

When the domain 4102 (Fig. 4) completes assembly using the control panel from domain 4103-1, the screws from domain 4103-2, the printed circuit board from domain 4103-3 and the motor from domain 4103-4, a slip for the unit (electric accessory) fabricated by the domain 4102 is fetched from the terminal 4107 and shipment is made to the domain 4101. When acceptance is made by the domain 4101, the acceptance data is returned to the domain 4102 in the same manner. On the basis of this data, the stock of sub-parts of the delivered unit (electric accessory) is subtracted from the parts inventory database 4106-4 using the organization of 4104-1. As a result, the number of parts in inventory recorded in the parts inventory database 4106-4 is increased by delivery of parts and is decreased by the shipping of a unit. Adopting this arrangement makes it possible to ascertain efficiently the number of parts, etc., currently in inventory.

In the description of the present invention, it is explained that domains include the databases, namely the received-order database, the machining planning database, the organization database, parts inventory database and order database, annexed to the order receiving, machining planning, constructional expansion, ordering planning and order functions. However, in terms of the functional construction of a domain, a domain is not an entity limited to an arrangement in which each database is included in a domain; a domain can be an entity from which a database annexed to each function is excluded.

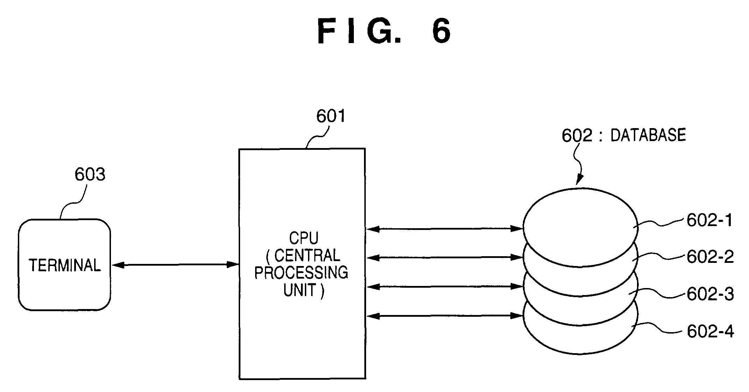

An approach to granting a terminal authority to refer to a domain and its data will be described with reference to Fig. 6. Shown in Fig. 6 are a central processing unit 601, a terminal 603 and data areas 602-1, 602-2, 602-3, 602-4, for each of the domains, allocated to a database.

In order to refer to the data in each area from the terminal 603, the domain number and a password that have been preserved in the database must be input to the domain. In other words, if authentication is not obtained from each terminal on a per-domain basis, reference cannot be made to the data of the domain. As a result, reference to data by a third party, namely a party other than one concerned with domain management, is prevented.

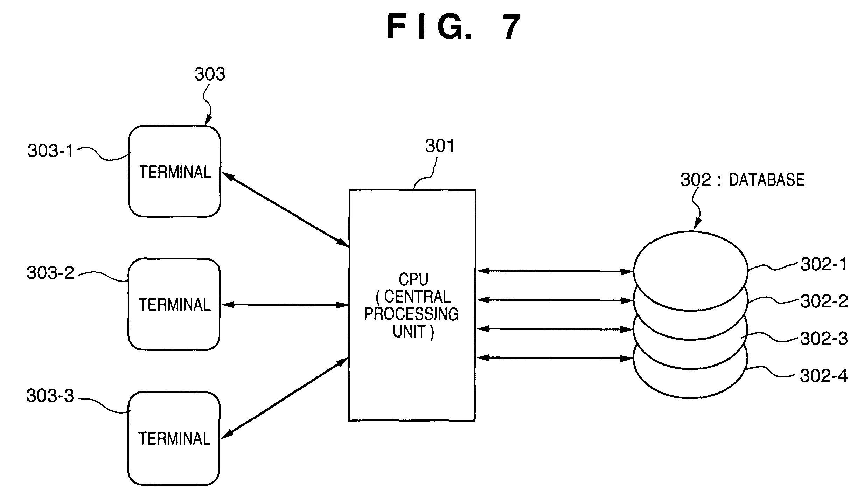

The arrangement of operating terminals, a CPU and a database in a computer will be described with reference to Fig. 7. Shown in Fig. 7 are operating terminals 303, a CPU 301 and a storage device (database) 302. The storage device 302 is allocated to domains as described with reference to Fig. 2. A storage device 302-1 is allocated for data of domain 200-1 in Fig. 2, a storage device 302-2 is allocated for data of domain 201-1, a storage device 302-3 is allocated for data of domain 221-1 and a storage device 302-4 is allocated for data of domain 231-1.

Data is managed on a per-domain basis and deletion and addition of data can be performed freely with the authorization of the domain manager (the individual in charge of the machining section). As a result, it is not required to leave unnecessary data against the volition of the domain manager and necessary data can be added on by one's own authority. In regard to a method of dealing with a case where the scale of the system is increased, generally the size of the smallest machining section is not changed even if the quantity of production at the production site is increased. In other words, if production is doubled, the personnel of a machining section are doubled. However, simultaneously doubling the number of machining sections and greatly increasing the number of management personnel in a machining section of the smallest unit is not done in terms of organizational management. With this system, it suffices to set an additional domain for organization in conformity with the organizational mode, and greatly increasing the number of parts handled in each workshop is rare in terms of organizational management.

If such a situation arises, the definition of smallest workshop to which a domain has been allocated will not be correct. Accordingly, re-definition is carried out in units of smaller workshops. As a result, the number of items of data in each domain is limited and processing speed will not decline owing to an increase in quantity of data.

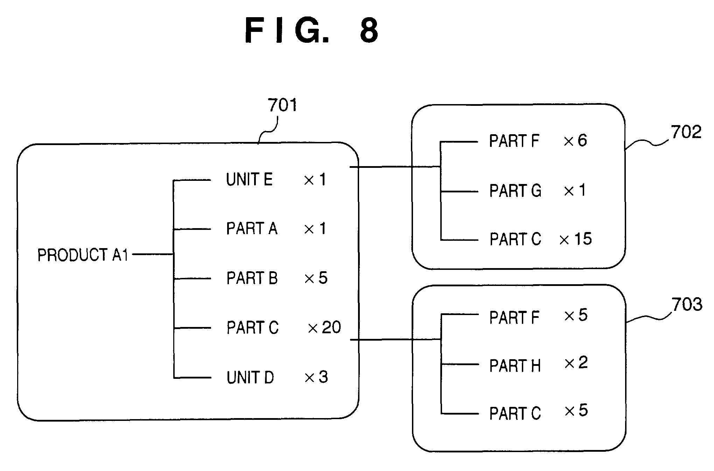

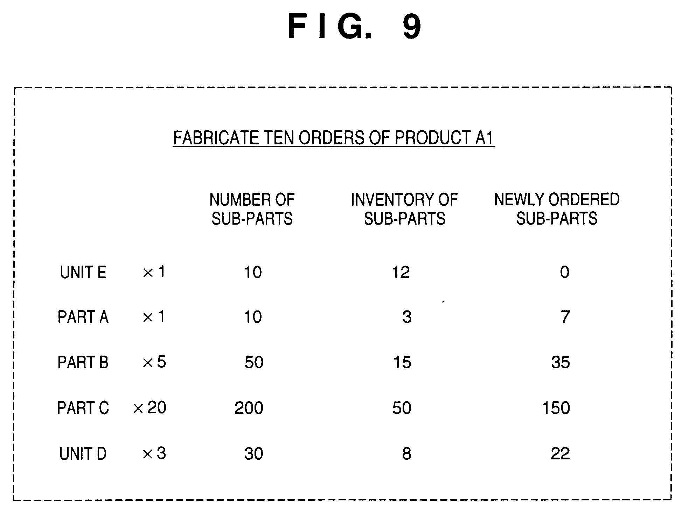

That amount of data processing is reduced by executing processing on a per-domain basis will be described with reference to Figs. 8 and 9.

A product A1 (701) comprises a unit E, parts A, B and C, and units D. The unit E comprises parts F, G and C (702). The unit D comprises parts F, H and C (703).

A case where there are ten orders for product A1 will be described with reference to Fig. 9. When the required number of sub-parts, the number of sub-parts in inventory and the number of sub-parts to be prepared are calculated, an order for the unit E is not issued, despite the fact that there is an order for the product A1, because the number of units E in stock is capable of satisfying the number of sub-parts required. Accordingly, expansion processing relating to domain 702 is not required. Thus, an ordering plan based upon the stock of sub-parts on a per-domain basis prevents processing based upon the total number of parts required by one order. The result is a lighter processing load upon the computer.

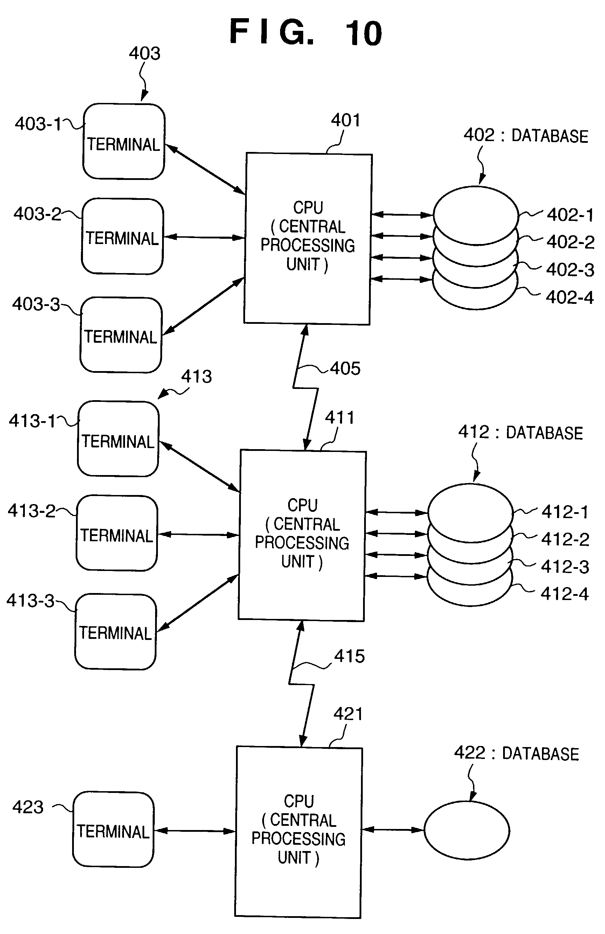

A method of detailing with an increase in number of domains will now be described with reference to Fig. 10. When a system composed of a CPU 401, database 402 and operating terminals 403 experiences an overload owing to an increase in number of domains, it will suffice to add on a system having the same configuration (CPU 411, database 412 and terminals 413) using a network 405.

It is also possible to execute processing by adding on a system (CPU 421, database 422 and terminal 423) having a small processing capability. It is also possible to set a machine having a high processing capability to processing for a larger number of domains or, in the case of a machine having a low processing capability, to assign fewer domains to the machine.

Connections 405, 415 between CPUs can be by LANs usually disposed in-house because orders are exchanged and reference is made to the data in each other's machining sections; a special data line is unnecessary.

Thus, the CPUs 401, 411, 421 and databases 402, 412, 422 need not be managed at the same location. The CPUs and databases need only be placed near the locations of the operating terminals 403, 413, 423 to which they belong.

### 〈Description of system redundancy〉

System redundancy, which is useful when part of the system fails, will now be described.

The description will be based upon how the files shown in Fig. 7 are held and the construction of the equipment shown in Fig. 8. It will be assumed by way of example that the intermediate computer system (CPU 411, database 412 and terminals 413) shown in Fig. 10 has failed. Though all activity such as data referencing ceases in regard to the domain that records the data, the domain corresponding to the higher order computer system (CPU 401, database 402 and terminals 403) and the domain corresponding to the lower order computer system (CPU 421, database 422 and terminal 423) hold each others data in the manner shown in Fig. 5. As a result, no difficulties arise in terms of the job.

What is affected is the domain corresponding to the intermediate computer system (CPU 411, database 412 and terminals 413) that has gone down. Reference to inventory, arrivals of delivered goods, etc., can no longer take place. With regard to activities such as arrivals of goods, however, it is possible for terminals such as 4108-1 shown in Fig. 4 to proceed with processing independently. The arrangement is such that even if a particular domain (domain 4102 in the case of terminal 4108-1) stops functioning, it is possible for acceptance and reference to be carried out based upon the data held by the terminal 4108-1 itself. It is possible for the terminal 4108-1 to send acceptance data after the function of domain 4102 has been restored.

New orders will no longer arrive at domains below the domain that has stopped functioning.

Since orders themselves are generated daily (the shortest interval possible) or, most usually, once a week, non-receipt of an order for two or three days does not pose a special problem. Next, consider a case where the communication line 405 or 415 between computers in Fig. 10 is severed. The effect of this failure will be that orders can no longer be transferred. As mentioned above, a failure lasting two or three days will not be a major hindrance to production. Under centralized information management, the entire parts ordering and parts management system ceases operating when part of the system such as the CPU fails. Under decentralized information management, however, such risk can be minimized.

### 〈Description of operating terminal)

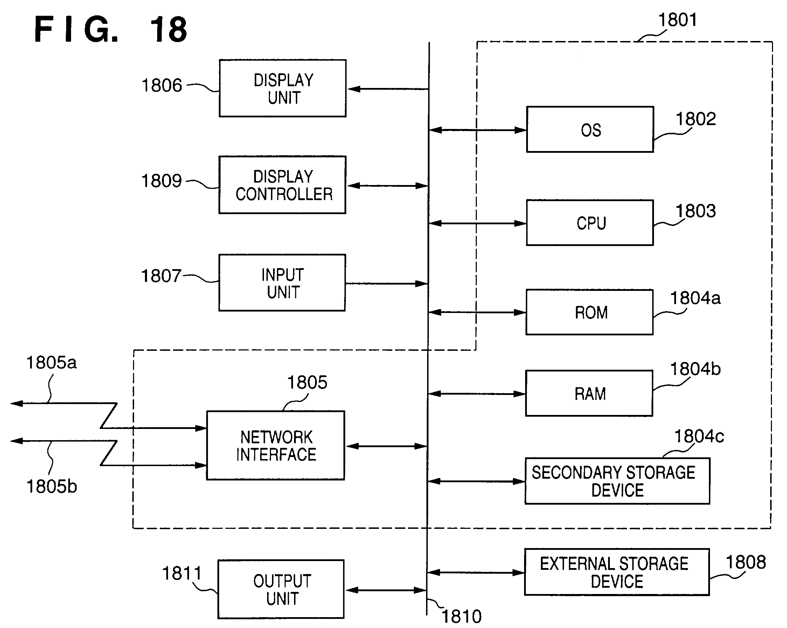

As shown in Fig. 18, a computer 1801 constructing a client and a server comprises an operating system (OS) 1802, a CPU 1803, a ROM 1804a, a RAM 1804b, a secondary storage device 1804c and a network interface 1805. Connected to the computer 1801 are a display unit 1806, a display controller 1809, an input unit 1807, an external storage device 1808 and an output unit 1811. An operation terminal consists of the aforementioned constitutions.

The input unit 1807 is for performing operations such as designating coordinates on a screen and making selections. Specific examples are a mouse, track ball, touch-sensitive pen, joystick, tablet and keyboard. Positions are designated and selections made by a cursor (an arrow symbol or cross) displayed on the screen.

The display unit 1806 displays data (characters, graphics, numerical values, etc.), which is sent back and forth between computers, on a display screen. An example of the type of display unit is a CRT display, liquid crystal display and plasma display, etc. These components construct an operating terminal.

Entry of an order to be issued and entry of data relating to parts order-receiving/ordering such as a machining plan and number of parts in stock is performed via the input unit 1807, and processing is executed by the CPU 1803 of the computer 1801. Issuance of an order to another domain is carried out with respect to a downstream domain via a bus 1810 and the network interface 1805. The network interface 1805 uses two communication lines (1805a, 1805b) selectively for communication with the outside. As described with reference to Fig. 15, the network interface 1805 switches between the connected LANs (1503, 1504) depending upon the secrecy of the data sent and received.

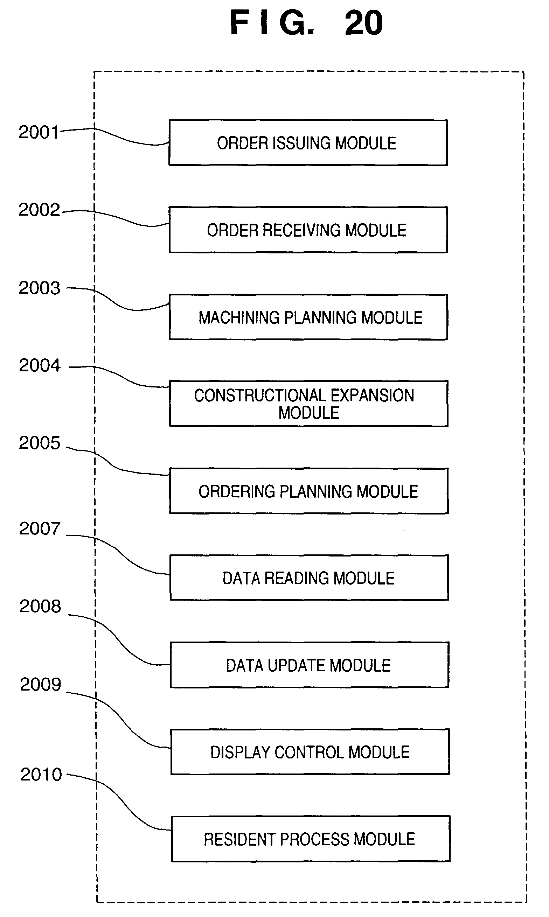

Further, a domain is capable of requesting another domain for specific data, such as machining planning and inventory information, needed by the domain per se. This request also is based upon a request from the input unit 1807. In response to a request for the data, a data reading module (2007 in Fig. 20) is activated and a request for transfer of the data is output to the specific domain. Data sent and received between domains is recorded in the secondary storage device 1804c, external storage device 1808 or RAM 1804b via the network interface 1805. By holding enough of the necessary information in a local domain, self-completed processing can be implemented even in a case where network communication failure occurs. The output unit 1811 is a printing processor, inclusive of a printer or the like, for outputting the result of order-receiving/ordering processing as a slip.

### 〈Display on computer screen〉

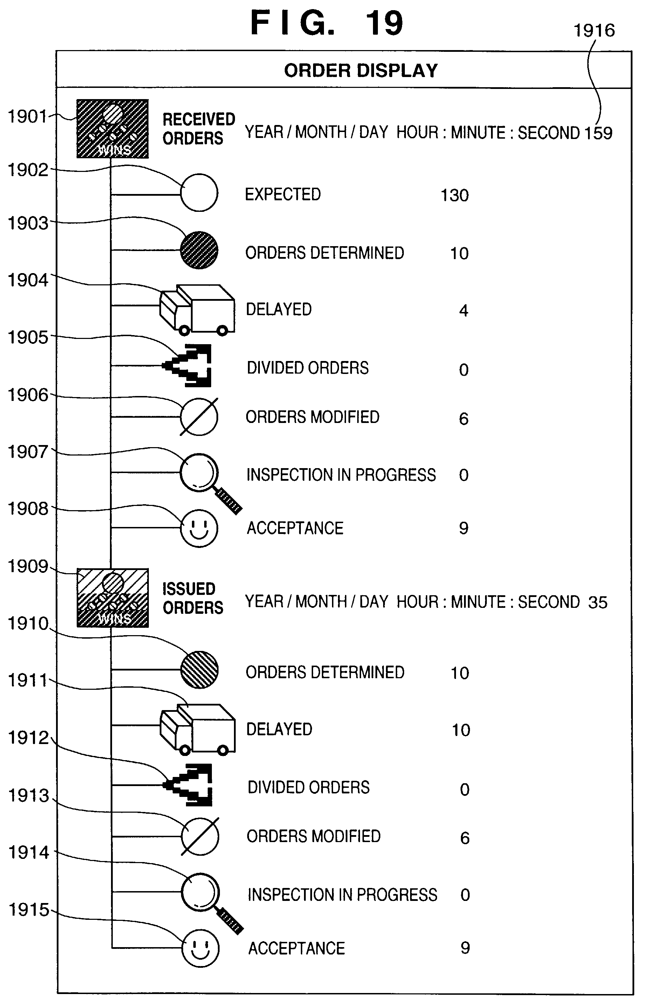

Fig. 19 shows a display on the screen of the display unit 1806. The display indicates receipt of an order from a higher order domain and issuance of an order to a lower order domain.

Icons are assigned to each managed item in a domain and the number of cases corresponding to each icon is displayed together with the icon. Since icons and data are displayed in combination, the processing status of each item can be visually ascertained in a direct manner. The icon display symbolizes work units within a job. Performing retrieval while interpreting character information is unnecessary.

An icon 1901 indicates management for receiving an order from a higher order domain and is displayed in combination with the number of received orders. The data display indicates that the number of received orders is 159.

An icon 1909 indicates management for issuing an order to a lower order domain and is displayed in combination with the number of issued orders. The data display indicates that the number of issued orders is 35.

Processing for combining icons and number of data items is executed by a display control module (2009 in Fig. 20) stored in a storage device (1808, 1804c, 1804a) under the management of the OS 1802.

The display control module outputs the combination of the icon and corresponding number of data items to the display controller 1809, and the latter displays the combination on the display unit 1806 in the form shown in Fig. 19.

The display controller 1809 judges whether data to be displayed corresponds to (a) both receiving of orders and issuing of orders, (b) receiving of orders only or (c) issuing of orders only and controls the display screen accordingly.

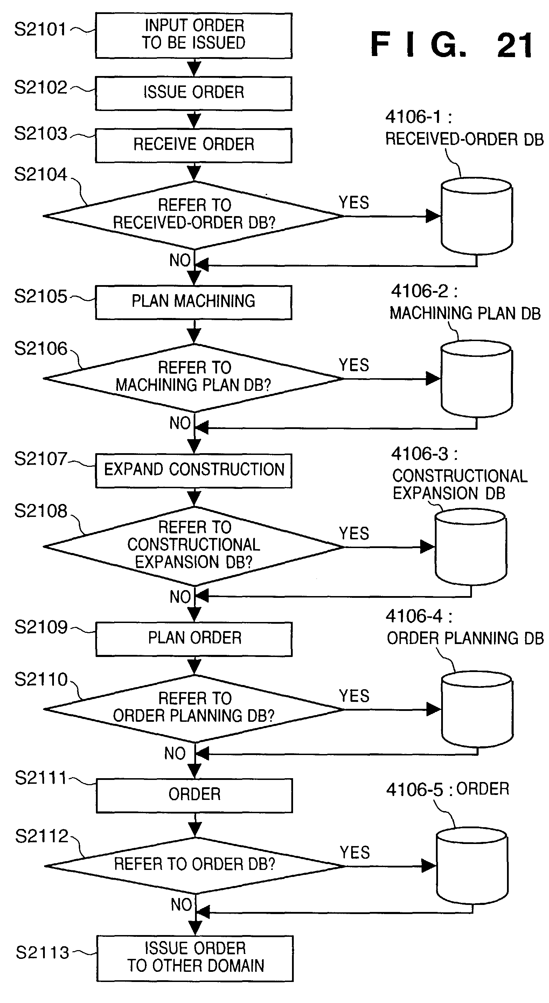

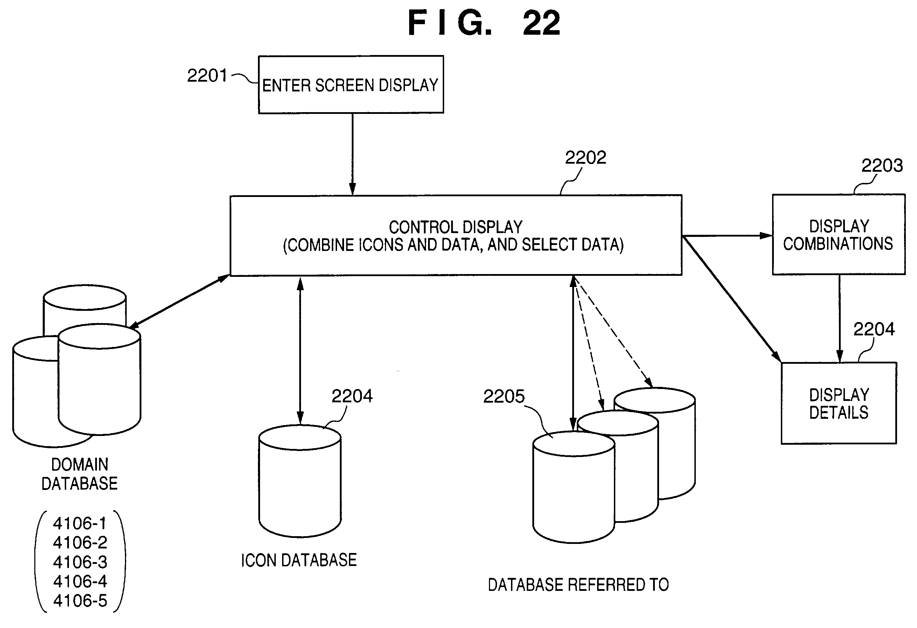

Further, on the basis of an input from the input unit 1807, the display controller 1809 causes the display unit 1806 to display detailed information relating to receipt of an order, machining planning, constructional expansion, ordering planning and orders. Fig. 21 is flowchart that shows the processing of a domain (for example, 4102 is expalined with Fig. 4). Fig. 22 is flowchart of processing for presenting a display on the display screen. The detailed information is displayed individually and includes the corresponding relationship between parts or units and the number thereof, time-limit management information, etc. The screen display corresponds to Figs. 8 and 9. A display control step (S2202 in Fig. 22) selects the necessary information from a domain database (4106-1, 2, 3, 4, 5 in Figs. 4 and 21), icon database (2204) and reference database (2205: other domain database, server database, etc.) and displays the information on the display unit (1806) (S2203, S2204).

### 〈Details of icon display〉

Fig. 19 illustrates a display where management for receiving orders is classified into seven items and management for issuing orders is classified into six items.

"EXPECTED" 1902 represents the orders expected to be received from a higher order domain and is displayed in combination with the number of orders. In the case of Fig. 19, the number of orders expected to be received is 130. It should be noted that the "EXPECTED" item is not displayed under order management (under icon 1909) because it is unnecessary to display one's own expected outgoing orders.

"ORDERS DETERMINED" (1903, 1910) indicates ordered articles for which such conditions as specification, delivery date and quantity have been determined and is displayed in combination with the number of orders for which these conditions have been met. When an order is determined it is deleted from the "EXPECTED" display so that the same order will not be displayed redundantly in under both the "EXPECTED" and "ORDERS DETERMINED" items. This processing is accomplished by ordinary read and write processing of the database in the client and server systems. In order to ascertain how an ordered article is progressing, one need only look at the "ORDERS DETERMINED" item. In the case of Fig. 19, ten orders have been determined.

"DELAYED" (1904, 1911) indicates ordered articles that have not yet been accepted by the designated delivery date and is displayed in combination with the number of articles not yet accepted. This item indicates an abnormal value for the job of the domain. Actively displaying the abnormal value from the system side so that a worker may view it enables the worker to quickly determine the status of a delay in scheduling, to change the order of priority of an activity and to place an emergency order to another job. In the case of Fig. 19, the status of delay in scheduling is four units for ordered articles received and ten units for articles for which orders have been issued.

"DIVIDED ORDERS (1905, 1912) indicates ordered articles that have been divided into two or more orders, or for which such division has been requested, after an order has been determined. In the case of Fig. 19, the number of items for which division is required is zero.

"ORDERS MODIFIED" (1906, 1913) indicates ordered articles whose specifications, etc., have been modified after determination of the order. In the case of Fig. 19, the number of orders for which specifications have been modified is six.

"INSPECTION IN PROGRESS" (1907, 1914) indicates that a delivered article is being inspected at the higher order domain. In the case of Fig. 19, the number of ordered articles undergoing inspection is zero.

"ACCEPTANCE" (1908, 1915) indicates ordered articles for which inspection and acceptance has been completed. In the case of Fig. 9, the acceptance of nine articles has been completed.

Thus, comprehensive information for the term from expectation of a received order within a job to acceptance of the order is classified and displayed in a time series.

It goes without saying that the object of the present invention can also be achieved by providing a storage medium storing the program codes of the software for performing the aforesaid functions of the foregoing embodiment to a system or an apparatus, reading the program codes with a computer (e.g., a CPU or MPU) of the system or apparatus from the storage medium, and then executing the program. In this case, the program codes read from the storage medium implement the novel functions of the embodiment, and the storage medium storing the program codes constitutes the invention. Further, the storage medium, such as a floppy disk, hard disk, optical disk, magneto-optical disk, CD-ROM, CD-R, magnetic tape, non-volatile type memory card or ROM can be used to provide the program codes. In a case where the present invention is applied to the aforementioned storage medium, the modules illustrated in the memory map shown in Fig. 20 are stored on the storage medium.

More specifically, the program codes of at least an "order issuing module" 2001, "order receiving module" 2002, "machining planning module" 2003, "constructional expansion module" 2004, "ordering planning module" 2005, "data reading module" 2007, "data update module" 2008, "display control module" 2009 and "resident process module" 210.

Furthermore, besides the case where the aforesaid functions according to the embodiment are implemented by executing the program codes read by a computer, the present invention covers a case where an operating system or the like working on the computer performs a part of or the entire process in accordance with the designation of program codes and implements the functions according to the embodiments.

The present invention further covers a case where, after the program codes read from the storage medium are written in a function extension board inserted into the computer or in a memory provided in a function extension unit connected to the computer, a CPU or the like contained in the function extension board or function extension unit performs a part of or the entire process in accordance with the designation of program codes and implements the function of the above embodiment.

In accordance with the present invention, it is possible to decentralize information processing relating to parts ordering and inventory management. An aspect of the present invention set forth in each claim is capable of providing at least one of the following effects:
1. Even if the number of parts increases, processing can be executed in a short period of time because the computer is not subjected to a concentrated load. In other words, processing (machining planning, constructional expansion, ordering planning, etc.) within a domain is executed faster than batch processing performed by the overall system.
2. Since processing is possible even with a system configuration based upon a small-sized computer, running cost can be lowered.
3. If number of units produced increases or decreases, it is unnecessary to repeat processing in regard to the entire makeup of a manufactured product; it will suffice to execute minimal re-processing on a per-domain basis. The makes it possible to issue an order for parts rapidly.
4. The overall system does not go down even if some domains fail.
5. Since data deletion or addition is performed on a per-domain basis, system management is facilitated.
6. Even if the makeup of a manufactured product is changed, it is possible to cope with the change rapidly and easily by altering the pattern in which the domains are connected.
7. It is possible to realize a production schedule in which the rate of operation of a manufacturing line maintained at a high level.
8. There is reduced possibility of system failure due to a sudden increase in orders.
9. The order receiver is capable of obtaining, rapidly and with ease, information relating to parts to be ordered henceforth by the order sender or information relating to machining of parts. As a result, the order receiver need not take the trouble to go to the factory that is the order sender, as is required in the prior art.
10. Disclosed information is managed on a per-domain basis and is limited to the necessary scope in the relevant machining section.
11. The order receiver is capable of obtaining, rapidly and with ease, information relating to parts to be ordered in the future or information relating to machining of parts. As a result, it is easier for the order receiver to draft beforehand a plan for purchasing and machining new parts.
12. Information can be managed on a real-time basis and it is possible to realize parts management in which information and materials match.

The present invention is not limited to the above embodiments and various changes and modifications can be made within the spirit and scope of the present invention. Therefore, to appraise the public of the scope of the present invention, the following claims are made.

A domain (102), which is a basic constituent for processing the issuance and receipt of orders for parts, executes processing for order issuance (102-5), order receipt (102-1), machining planning (102-2), constructional expansion (102-3) and ordering planning (102-4), thereby decentralizing processing of information relating to parts issuance and inventory. It is possible to realize sufficiently high processing speed even with a small-sized system. In addition, the resulting system allows parts management on a real-time basis. The system lends itself to enlargement and rapid changes in production scheduling that accompany an increase in number of parts, this not be readily feasible with conventional centralized information management.

## Claims

1. A parts ordering system characterized by having a first domain, a second domain and a third domain connected in a tree structure, wherein said second domain includes:
expanding means (4105-3) for expanding, into its component parts, an order that has been received from the first domain; and
communication means (4105-5) for communicating, to the third domain, the order for each component part expanded by said expanding means.

2. The system according to claim 1, wherein said first domain, second domain and third domain have means for issuing an order (101), means for receiving an order (4105-1), means for devising a machining plan based upon the order received (4105-3), means for performing expansion (4105-4), into each component part, in accordance with the machining plan, means for devising an ordering plan for a part that has been expanded into its component parts (4105-5), means for ordering a part expanded into individual parts units based upon the ordering plan (4107,4104), means for reading data from a database in accordance with the order for the part, and means for writing the read data to the database (4107, 4106-1,2,3,4,5);
wherein a plurality of connections are made possible on a network in a tree structure.

3. The system according to claim 2, wherein said means for receiving an order (4105-1) has means for making a comparison with data, which has been retained in a database, to determine whether an order is a new order, a modified order or re-transmission of the same order.

4. The system according to claim 2, wherein said means (4105-2) for devising a machining plan has means for comparing a designated delivery date of a received order and planned production date retained in a database, and means for scheduling an expected production date based upon results of the comparison.

5. The system according to claim 2, wherein said means (4105-3) for performing expansion into each component part has means for performing expansion in units of individual parts constructing a manufactured product based upon a received order, and means for calculating the number of parts.

6. The system according to claim 2, wherein said means (4105-4) for devising an ordering plan has means for comparing a number of parts contained in inventory and a number of parts required, and means for calculating minimum units of an order based upon results of the comparison.

7. The system according to claim 1, wherein said first domain, which corresponds to an ordering starting point, has means (101) for issuing an order in accordance with an order input, and said third domain, which corresponds to an ordering end point, has means (103a) for receiving an order in response to the issuance of the order.

8. The system according to claim 1, wherein said first (1620), second (1630) and third (1640) domains are connected in a nodeless tree structure, and an order for each component part processed by said first domain (1620) is communicated to the third domain (1640) without processing being duplicated by the expanding means of said second domain (1630).

9. A parts ordering system characterized by in which a domain on a first network and a domain on a second network are connected via a public line, wherein the domain on said second network includes:
means (102-1) for receiving an order from the domain (1040) on said first network;
means (102-2) for devising a machining plan based upon the order;
means (102-3) for performing expansion, into each component part, in accordance with the machining plan;
means (102-4) for devising an ordering plan for each expanded component part; and
means (102-5) for ordering in units of individual parts in accordance with the ordering plan.

10. The system according to claim 9, wherein the domain (3080) on a third network connected to the domain on the second network via a LAN receives an order, which is issued by the domain on said first network, via a public line (4000), the domain (2070) on said second network and said LAN (4100).

11. A parts ordering system characterized by having a database which stores a number of specific parts contained in inventory, as well as a first domain, second domain and third domain connected in a tree structure, wherein said second domain includes:
means (4105-3) for performing expansion, into each component part, based upon an order received from the first domain;
communication means (4105-5) for communicating, to the third domain, orders in individual parts units expanded by said expanding means; and
stopping means (4105-4) for comparing the number of specific parts contained in inventory stored in the database and a required number of specific parts obtained by expansion performed by said expanding means, and stopping the communication of an order to the third domain in a case where the number of specific parts contained in inventory is greater, by a prescribed number, than the required number of specific parts.

12. A parts ordering system characterized by in which a first domain is internally provided with a database in which a number of specific parts contained in inventory has been stored, wherein said first domain includes:
means (4105-3) for performing expansion, into each component part, based upon an order received from the second domain;
communication means (4105-5) for communicating, to the third domain, orders in individual parts units expanded by said expanding means; and
stopping means (4105-5) for comparing the number of specific parts contained in inventory stored in the database within the first domain and a required number of specific parts obtained by expansion performed by said expanding means, and stopping the communication of an order to the third domain in a case where the number of specific parts contained in inventory is greater, by a prescribed number, than the required number of specific parts.

13. A parts ordering system characterized by having a first domain and a second domain connected in a tree structure, wherein said second domain includes:
expanding means (4105-3) for performing expansion, into each component part, based upon an order received from the first domain; and
first control means (505, 503-4) which controls reference permission for referring, from an operating terminal connected to said second domain, to status of order receiving/issuance in individual parts units expanded by said expanding means.

14. The system according to claim 13, wherein said first control means permits reference to order data (501-1), machining plan data (501-2) and sub-part inventory data (501-3) of said first domain upon limiting this data to that required by said second domain.

15. The system according to claim 14, wherein said first control means (505, 503-4) gives reference permission based upon a combination of a domain number and password.

16. A parts ordering system characterized by having a first domain and a second domain connected in a tree structure, wherein said second domain includes:
expanding means (4105-3) for expanding, into component parts, an order that has been received from the first domain;
first control means (505, 503-4) which controls permission to refer to an order for a component part expanded by said expanding means, reference being made from an operating terminal connected to the second domain, and second control means (503-1,2,3) for controlling permission to refer to ordering information, within the first domain, related to an order issued to the second domain.

17. The system according to claim 16, wherein the system is constituted by a single domain having order issuing means (101), order receiving means (103a), machining planning means (102-2), constructional expansion means (102-3), ordering planning means (102-4) and ordering means (102-5), an interface (1805) for making possible interconnection of domains in a tree structure, and input means (1807) for inputting, to a database, information relating to a part delivered in accordance with the order.

18. A parts ordering system characterized by comprising a server (1605), a client (1610a, b, c, d), an operating system (1802), a central processing unit (1803), a storage device (1804a, b, c), an input unit (1807), and output unit (1811) and a resident process program (2010).

19. The system according to claim 18, wherein said storage device is a database (1711, 1721, 1731, 1741).

20. A parts ordering system characterized by in which a domain is connected to a first network (1503) and a second network (1504), said system having means for communicating information between said first network and said second network selectively depending upon importance of secrecy of the information.

21. A parts ordering method whereby a first domain, a second domain and a third domain connected in a tree structure deliver and receive orders, characterized by comprising:
an expanding step (S2107) at which the second domain expands, into its component parts, an order that has been received from the first domain; and
a communication step (S2111) at which the second domain communicates, to the third domain, an order for each component part expanded at the expanding step.

22. A parts ordering method whereby a first domain, a second domain and a third domain connected in a tree structure deliver and receive orders via a database which stores a number of specific parts contained in inventory, characterized by comprising:
an expanding step (S2107) at which the second domain performs expansion, into each component part, based upon an order received from the first domain;
a communication step (S2109) at which the second domain communicates, to the third domain, orders in individual parts units expanded at the expanding step; and
a stopping step (S2111) at which the second domain compares the number of specific parts contained in inventory stored in the database and a required number of specific parts obtained by expansion performed at the expanding step, and stops the communication of an order to the third domain in a case where the number of specific parts contained in inventory is greater, by a prescribed number, than the required number of specific parts.

23. A parts ordering method whereby a first domain, which is internally provided with a database in which a number of specific parts contained in inventory has been stored, accepts an order from a second domain and communicates the order to a third domain, characterized by comprising:
an expanding step (S2107) at which the first domain performs expansion, into each component part, based upon an order received from the second domain;
a communication step (S2109) at which the first domain communicates, to the third domain, orders in individual parts units expanded at the expanding step; and
a stopping step (S2111) at which the first domain compares the number of specific parts contained in inventory stored in the database within the first domain and a required number of specific parts obtained by expansion performed at the expanding step, and stops the communication of an order to the third domain in a case where the number of specific parts contained in inventory is greater, by a prescribed number, than the required number of specific parts.

24. A parts management system characterized by having a database which stores a number of specific parts contained in inventory, as well as a first domain, a second domain and a third domain connected in a tree structure, wherein said second domain includes:
means (4105-3) for performing expansion, into each component part, based upon an order received from the first domain; and
communication means (4105-4, 4105-5) for communicating, to the third domain, orders in individual parts units expanded by said expanding means;
said second domain having input means (4107, 4106-1, 2, 3, 4, 5) for inputting, to the database, information relating to a part delivered in accordance with an order.

25. The system according to claim 24, wherein the system is constituted by a single domain having order issuing means (101), order receiving means (103a), machining planning means (102-2), constructional expansion means (102-3), ordering planning means (102-4) and ordering means (102-5), an interface (1805) for making possible interconnection of domains in a tree structure, and input means (1807) for inputting, to a database, information relating to a part delivered in accordance with the order.

26. A parts management system comprising a server (1605, 1701, 1702), a client (1610a, b, c, d), an operating system (1802), a central processing unit (1803), a storage device (1804a, b, c), an input unit (1807), and output unit (1811) and a resident process program (2010).

27. The system according to claim 26, wherein said storage device is a database (1711, 1721, 1731, 1741).

28. A parts management system in which a domain is connected to a first network (1503) and a second network (1504), said system having means (1805) for communicating information between said first network and said second network selectively depending upon importance of secrecy of the information.

29. A computer readable recording medium on which has been recorded a program, said program characterized by having, by which the following means are implemented by a computer:
means (101) for issuing an order;
means (102-1) for receiving an order;
means (102-2) for devising a machining plan based upon the order received;
means (102-3) for performing expansion, into each component part, in accordance with the machining plan;
means (102-4) for devising an ordering plan for a part that has been expanded into its component parts;
means (102-5) for ordering a part expanded into individual parts units based upon the ordering plan;
means (4104, 4107) for reading data from a database in accordance with the order for the part; and
means (4107, 4106-1, 2, 3, 4, 5) for writing the read data to the database.

30. An order-receiving/issuing management apparatus for managing receipt of an order in which a local domain receives an order from a first domain, and issuance of an order in which the local domain issues an order to a second domain, characterized by comprising:
display means (1806) for displaying data; and
display control means (1809) for displaying, in combination on said display means, an icon (1901) for identifying receipt of an order or issuance of an order, and data (1916) indicating results of receipt of an order or issuance of an order represented by the icon.

31. The apparatus according to claim 30, wherein said data (1916) is the number of processed issued/received orders corresponding to said icon (1901).

32. The apparatus according to claim 30, wherein said icon displays one or a combination of a plurality of "expected" (1902), "orders determined (1903, 1910), "delayed" (1904, 1911), "divided orders" (1905, 1912), "orders modified" (1906, 1912), inspection in progress" (1907, 1914) and "acceptance" (1909, 1915).

33. An order-receiving/issuing management method for managing receipt of an order in which a local domain receives an order from a first domain, and issuance of an order in which the local domain issues an order to a second domain, characterized by comprising:
a display step (S2104, 2106, 2108, 2110, 2112, 2201, 2203) of displaying data; and
a display control step (S2203) of outputting, in combination to said display step, an icon for identifying receipt of an order or issuance of an order, and data indicating results of receipt of an order or issuance of an order represented by said icon.

34. A computer readable recording medium characterized by on which has been recorded a program by which the following steps are implemented by a computer:
a display step (S2104, 2106, 2108, 2110, 2112, 2201, 2203) of displaying data; and
a display control step (S2202) of outputting, in combination to said display step, an icon for identifying receipt of an order or issuance of an order, and data indicating results of receipt of an order or issuance of an order represented by said icon.

35. The apparatus according to claim 30, wherein said display control means (1809) displays receipt of an order, (4106-1) a machining plan (4106-2), constructional expansion (4106-3), an ordering plan (4106-4) and detailed information (4106-5) of an order on the display means (1806) based upon a command from input means (1807).

36. The method according to claim 33, wherein said display control step (S2202) displays receipt of an order (4106-1), a machining plan (4106-2), constructional expansion (4106-3), an ordering plan (4106-4) and detailed information (4106-5) of an order at said display (S2104, 2106, 2108, 2110, 2112, 2201, 2203) step based upon a command from an input step (S2104, 2106, 2108, 2110, 2112).
